# EUROPEAN PATENT APPLICATION

(11) **EP 4 318 902 A1**
(43) Date of publication of application: **07.02.2024**
(21) Application number: 21940949.7
(22) Date of filing: 15.12.2021
(51) Int. Cl.: H02K 21/24, H02K 1/27, H02K 7/00, H02K 1/16, H02K 1/20, H02K 1/28, H02K 16/02, H02K 3/04

(54) **AXIAL MOTOR**

(30) Priority: 18.05.2021 KR 20210064004
(71) Applicant: Eflow Co., Ltd., Seongsan-gu Changwon-si, Gyeongsangnam-do 51542 (KR)
(72) Inventor: YOUN, Su Han, Haman-gun, Gyeongsangnam-do 52043 (KR)
(74) Representative: Isarpatent
(86) International application number: PCT/KR2021/019071
(87) International publication number: WO 2022/244939

(57) **Abstract**

An axial motor according to the present invention includes: a shaft; a stator means having a stator casing, a core of which both ends are exposed from both ends of the stator casing in an axial direction, and a coil accommodated in the stator casing so as to encompass the core, and having the shaft penetratively inserted therein; a plurality of rotor means having a plurality of magnets spaced certain distances apart in a radial direction of the shaft and arranged in a circumferential direction to face the core exposed from one end of the stator casing in the axial direction of the shaft, and a rotor fixing plate, which fixes the magnets such that one surface of the magnet facing the core is exposed and which is injected to be inserted into the stator means and fixed and coupled so as to be integrally rotatable with the shaft, and being inserted into both ends of the stator means; a top lid into which the shaft is rotatably inserted, and which is coupled to be attachable/detachable to/from the stator casing so that a rotor means located at one end of the shaft is accommodated therein; and a bottom lid into which the shaft is rotatably inserted, and which is coupled to be attachable/detachable to/from the stator casing so that a rotor means located at the other end of the shaft is accommodated therein, wherein, when one end of the rotor means is inserted into the stator means, facing surfaces of the magnets and the core are located at certain distances.

## Description

### TECHNICAL FIELD

The present invention relates to an axial motor, and more particularly, to an axial motor that can be easily assembled.

### BACKGROUND ART

An axial motor refers to a motor in which a rotor and a stator are arranged in an axial direction of a shaft. At this time, magnets of the rotor face each other at certain distances from a core of the shaft in the axial direction. Therefore, when a current is supplied to a coil wound around the core, the rotor rotates.
Korean Patent No. 10-2156481 (registered on September 9, 2020)
Korean Patent Publication No. 10-2017-0117065 (published on October 20, 2017)

### DESCRIPTION OF EMBODIMENTS

### TECHNICAL PROBLEM

In the case of an axial motor, a rotor and a stator are arranged at certain distances in an axial direction. At this time, because a core and magnets are formed in multiple stages, distances between the core and magnets arranged in multiple stages need to be constant. Therefore, in the case of an axial motor, assembly is complicated because the distances between the core and magnets need to be kept constant, and assembly is difficult even when a rotor and a stator are expanded into multiple stages.

The present invention is intended to solve the above problems. The present invention provides an axial motor that is not only easy to assemble but also easy to expand a rotor and a stator into multiple stages.

### SOLUTION TO PROBLEM

An axial motor according to the present invention includes a shaft, a stator means, a plurality of rotor means, a top lid, and a bottom lid. The stator means includes a stator casing, a core of which both ends are exposed from both ends of the stator casing in an axial direction, and a coil accommodated in the stator casing so as to encompass the core, wherein the shaft is penetratively inserted. The rotor means includes a plurality of magnets spaced certain distances apart in a radial direction of the shaft and arranged in a circumferential direction to face the core exposed from one end of the stator casing in the axial direction of the shaft, and a rotor fixing plate, which may fix the magnets such that one surface of the magnet facing the core is exposed and which is injected to be inserted into the stator means and fixed and coupled so as to be integrally rotatable with the shaft, and is inserted into both ends of the stator means. The top lid, into which the shaft is rotatably inserted, is coupled to be attachable/detachable to/from the stator casing so that a rotor means located at one end of the shaft is accommodated therein. The bottom lid, into which the shaft is rotatably inserted, is coupled to be attachable/detachable to/from the stator casing so that a rotor means located at the other end of the shaft is accommodated therein. When one end of the rotor means is inserted into the stator means, facing surfaces of the magnets and the core may be located at certain distances.

In addition, in the axial motor, the stator casing preferably includes a stator housing that accommodates the core and is open at both ends, a stator upper guard coupled to be attachable/detachable to/from one end of the stator housing, and a stator lower guard coupled to be attachable/detachable to/from the other end of the stator housing. The core preferably includes a first core portion having a first header portion and a first winding portion protruding in an axial direction from the first header portion, and a second core portion having a second winding portion protruding in an axial direction from a second header portion so that one end of the second header portion comes into contact with one end of the first winding portion so that the second header portion and the coil are wound. The stator means preferably includes an upper carrier in which resin is injected so that one surface of the first header portion is exposed at one end of the stator means and is fixed to the stator upper guard by surrounding the first core portion and a lower carrier that can be fixed to the stator lower guard by surrounding the second core portion so that one surface of the second header portion is exposed at the other end of the stator means, and the axial motor further includes a carrier portion through which the coil is wound and the shaft is inserted between the first head portion and the second header portion.

In addition, in the axial motor, the upper carrier is preferably injected so that its inner peripheral surface protrudes in an axial direction, and the lower carrier is preferably injected so that its inner peripheral surface protrudes in an axial direction. In this case, the carrier portion is coupled to be attachable/detachable to/from one end protruding in an axial direction so that the upper carrier and the lower carrier surround the coil.

In addition, the axial motor preferably further includes a plurality of gap stoppers for limiting a position of an end portion of the rotor fixing plate in an axial direction of the shaft so that the magnet may be located at a certain distance from an opposing surface of the coil when the rotor fixing plate is inserted into the stator mean.

In addition, in the axial motor, it is preferable that a plurality of stator means are provided in the axial direction of the shaft. In this case, the axial motor preferably further includes a rotor middle housing that accommodates the rotor means located between the stator means and may be fixed to be attachable/detachable to/from the stator casing.

In addition, in the axial motor, the coil has a bar-shaped rectangular shape with a square cross-section, and is preferably wound in one stage in a width direction of the core and wound in a longitudinal direction of the core.

In addition, in the axial motor, it is preferable that a thickness of the coil in the width direction of the core is greater than a thickness of the coil in an axial direction of the core.

In addition, in the axial motor, the coil is preferably made of a hollow tube so that refrigerant may flow therein.

### ADVANTAGEOUS EFFECTS OF DISCLOSURE

According to the present invention, a multi-stage motor may be formed by combining a plurality of stator means and a plurality of rotor means to a shaft. Therefore, it is easy to configure a multi-stage motor.

In addition, when a rotor means is inserted into a stator means, magnets of the rotor means and a core of the stator means may maintain a certain distance from each other. Therefore, assembly of the motor is easy.

### BRIEF DESCRIPTION OF DRAWINGS

FIG. 1 is a perspective view of an embodiment of an axial motor according to the present invention;
FIG. 2 is a cross-sectional view of the embodiment of FIG. 1;
FIG. 3 is an exploded view of the embodiment of FIG. 1;
FIG. 4 is a partial cross-sectional view of a stator means of the embodiment of FIG. 1;
FIG. 5 is an exploded view of a stator means of the embodiment of FIG. 1;
FIG. 6 is a front view of a rotor means of the embodiment of FIG. 1;
FIG. 7 is a perspective view of a rotor means of the embodiment of FIG. 1;
FIG. 8 is an exploded view of FIG. 7;
FIG. 9 is a cross-sectional view of another embodiment of an axial motor according to the present invention; and
FIG. 10 is an exploded view of the embodiment of FIG. 9.

### MODE OF DISCLOSURE

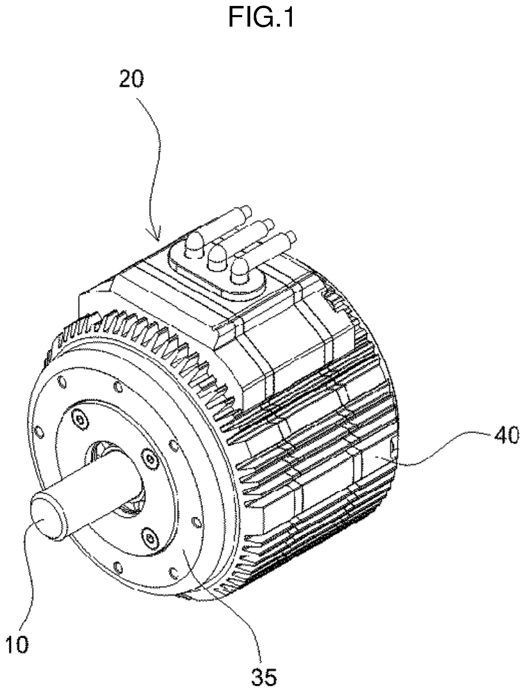

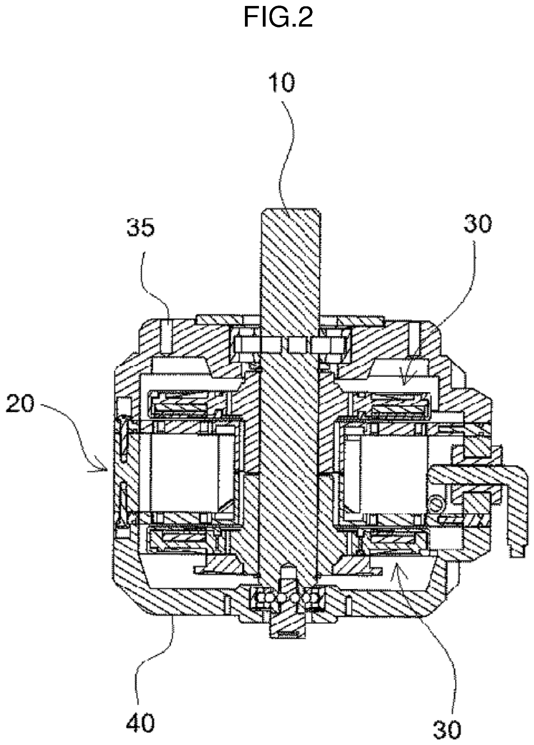

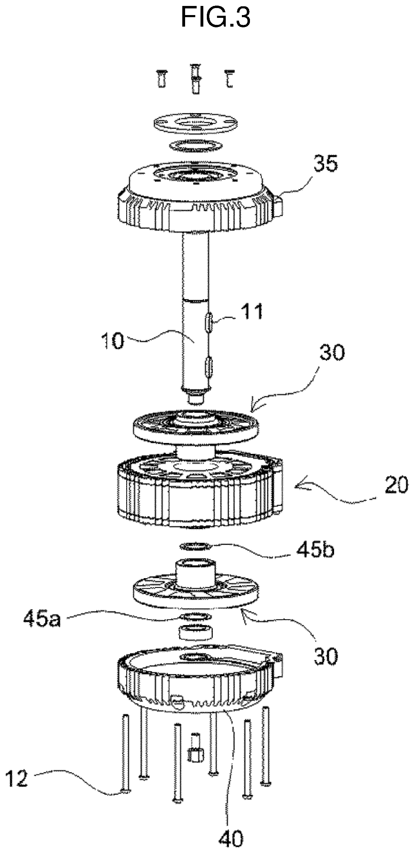

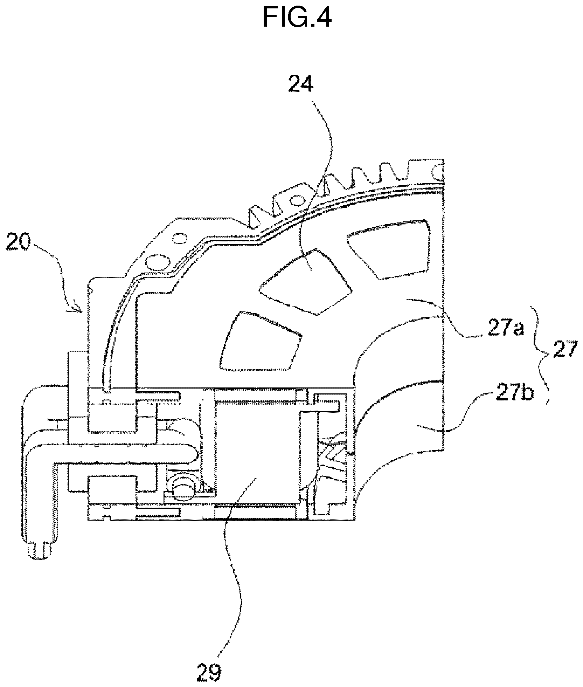

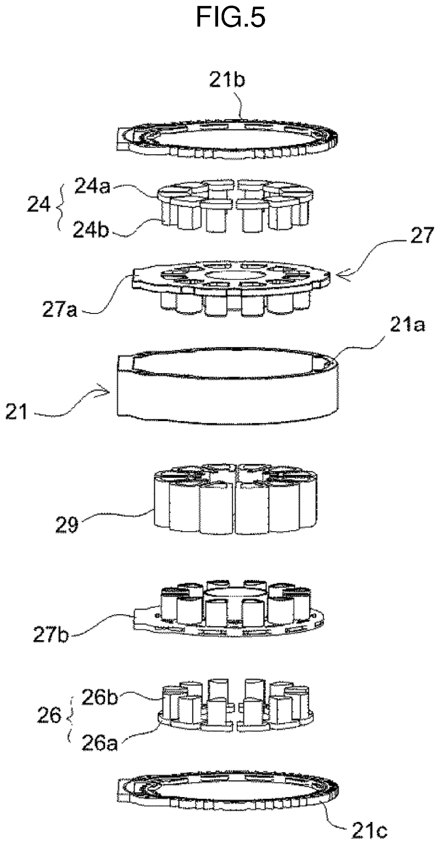

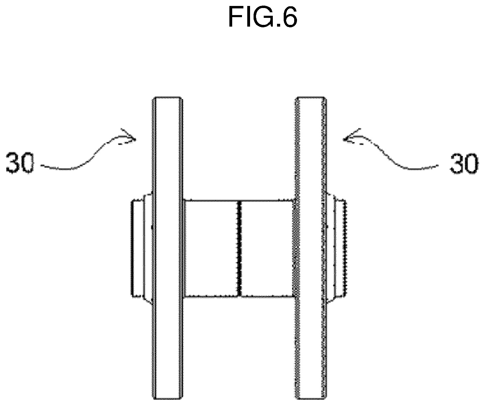

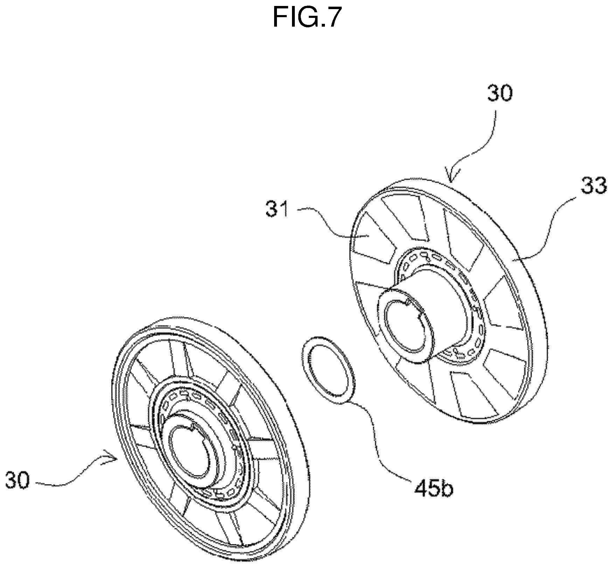

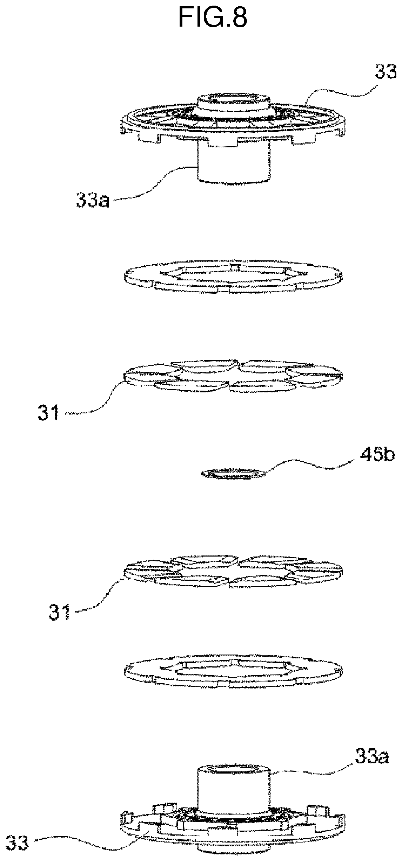

An embodiment of an axial motor according to the present invention will be described with reference to FIGS. 1 to 8.

The axial motor according to the present invention includes a shaft 10, a stator means 20, a rotor means 30, a top lid 35, a bottom lid 40, and gap stoppers 45a and 45b.

The stator means 20 includes a stator casing 21, a core, a carrier portion 27, and a coil 29.

The stator casing 21 includes a stator housing 21a, a stator upper guard 21b, and a stator lower guard 21c. The stator housing 21a is open at both ends and accommodates the core and the coil 29 therein. The stator upper guard 21b is penetrated so that both ends are open in the same way as the stator housing 21a and is coupled to be attachable/detachable to/from one end of the stator housing 21a. The stator lower guard 21c is also penetrated so that both ends are open and is coupled to be attachable/detachable to/from the other end of the stator housing 21a. In the case of this embodiment, the stator upper guard 21b and the stator lower guard 21c are coupled to the stator housing 21a with bolts.

The core has a first core portion 24 and a second core portion 26. The first core portion 24 includes a first header portion 24a and a first winding portion 24b that protrudes in an axial direction from one surface of the first header portion 24a. The second core portion 26 includes a second header portion 26a and a second winding portion 26b that protrudes in an axial direction from one surface of the second header portion 26a. The first core portion 24 and the second core portion 26 are manufactured by molding and heat treating metal powder. One end of the first header portion 24a and one end of the second header portion 26a come into contact with each other to form a core.

The carrier portion 27 includes an upper carrier 27a and a lower carrier 27b. The upper carrier 27a serves to insulate the first core portion 24 from the coil 29 and fix the first core portion 24 to a stator casing 1. For this purpose, the upper carrier 27a is formed by injecting resin to surround the first core portion 24 so that one surface of the first header portion 24a is exposed at one end of the stator casing 21 and to couple the first core portion 24 to the stator upper guard 21b. The first core portion 24 is fixed to the stator upper guard 21b by the upper carrier 27a. At this time, the upper carrier 27a is injected to protrude in an axial direction so that its inner peripheral surface surrounds the inserted shaft 10.

The lower carrier 27b serves to insulate the second core portion 26 from the coil 29 and fix the second core portion 26 to the stator casing 1. For this purpose, the lower carrier 27b is formed by injecting resin to surround the second core portion 26 so that one surface of the second header portion 26a is exposed at the other end of the stator casing 21 and to couple the second core portion 26 to the stator lower guard 21c. The second core portion 26 is fixed to the stator lower guard 21c by the lower carrier 27b. At this time, the lower carrier 27b is injected to protrude in an axial direction so that its inner peripheral surface surrounds the inserted shaft 10.

When the stator upper guard 21b and the stator lower guard 21c are coupled to the stator housing 21a, the first core portion 24 and the second core portion 26 are formed so that one end of the first winding portion 24b and one end of the second winding portion 26b come into contact with each other. In addition, one end of the upper carrier 27a and one end of the lower carrier 27b protruding in an axial direction are formed to be coupled to each other.

The coil 29 is formed to wind the stator upper guard 21b and the stator lower guard 21c surrounding the first winding portion 24b and the second winding portion 26b between the first header portion 24a and the second header portion 26a.

At this time, the coil 29 has a rectangular bar shape with a square cross section, and is wound in one stage in a width direction of the core and wound in a length direction of the core. In addition, a thickness of the core in the width direction is formed to be much greater than a thickness of the core in the axial direction. In this case, because the coil 29 has a rectangular shape, a gap between coils 29 may be reduced, thereby increasing the density of winding and increasing output. When the thickness of the core in the width direction is greater than the thickness of the core in the axial direction, the coil 29 may be wound thickly around the core, creating an effect as if the coil is wound in multiple stages.

In addition, the coil 29 may be formed as a hollow tube to allow coolant to flow therein. When current is supplied to the coil 29 and a motor operates, heat is generated in the coil 29. In this case, when the coil 29 overheats, the efficiency of the motor decreases, so the coil 29 needs to be cooled. Therefore, the coil 29 may be cooled by forming the coil 29 as a hollow tube and allowing coolant to flow therein.

In the stator means 20, the upper carrier 27a and the lower carrier 27b are injected with resin, so the stator upper guard 21b, the first core portion 24, and the upper carrier 27a are integrally fixed and coupled, and the stator lower guard 21c, the second core portion 26, and the lower carrier 27b are integrally fixed and coupled.

After fastening the stator lower guard 21c to the stator casing 21, the coil 29 is mounted on one end protruding in an axial direction of the lower carrier 27b, and the stator upper guard 21b is fastened to the stator casing 21. Then, the stator means 20 is assembled.

The rotor means 30 includes a magnet 31 and a rotor fixing plate 33. A plurality of magnets 31 are arranged in a circumferential direction at certain distances in a radial direction of the shaft 10 to face a core exposed at one end of the stator casing 21 in an axial direction of the shaft 10. The rotor fixing plate 33 fixes the magnet 31 so that one surface of the magnet 31 is exposed to face the core and is fixedly coupled to the shaft 10 so that the rotor fixing plate 33 may rotate integrally with the shaft 10. In the case of this embodiment, the rotor fixing plate 33 is fixedly coupled to the shaft 10 and rotated integrally using a key 11. The rotor fixing plate 33 keeps the magnet 31 spaced apart from an opposing core by a certain distance. For this purpose, an inner peripheral surface of the rotor fixing plate 33 protrudes to be inserted into the stator means 20. When a pair of rotor means 30 are mounted on both ends of the stator means 20, protruding ends 33a of the rotor fixing plate 33 come into contact with each other so that the magnets 31 may maintain a certain distance from the core. In the case of this embodiment, the ends 33a of the rotor fixing plate 33 contact each other with the gap stopper 45b therebetween.

The top lid 35 is inserted so that the shaft 10 may rotate, accommodates the rotor means 30 located at one end of the shaft 10, and is coupled to be attachable/detachable to/from the stator casing 21.

The bottom lid 40 is inserted so that the shaft 10 may rotate, accommodates the rotor means 30 located at the other end of the shaft 10, and is coupled to be attachable/detachable to/from the stator casing 21. In this embodiment, the top lid 35, the stator means 20, and the bottom lid 40 are coupled with a bolt 12.

The gap stoppers 45a and 45b serve to maintain a certain distance between the magnet 31 of the rotor unit 30 and the core of the stator unit 20 when the rotor unit 30 is assembled. To this end, the gap stoppers 45a and 45b limit a position of an end of the rotor fixing plate 33 in the axial direction of the shaft 10 when the rotor fixing plate 33 is inserted into the stator means 20. That is, the first gap stopper 45a and the second gap stopper 45b are mounted on the shaft 10 to keep a distance between the magnet 31 and the core constant.

In this embodiment, the other end of the shaft 10 is mounted on the bottom lid 40. In order to locate the rotor means 30 at a certain point, the first gap stopper 45a is fixed to the other end of the shaft 10. When the rotor means 30 is mounted on the shaft 10, the rotor means 30 is supported by the first gap stopper 45a and is located at a certain point on the shaft 10.

When the stator means 20 is inserted into the shaft 10 so that the stator casing 21 comes into contact with the bottom lid 40, the magnet 31 of the rotor means 30 and the core exposed on a lower surface of the stator means 20 maintain a certain distance.

The second gap stopper 45b is inserted into the shaft 10 so that it comes into contact with one end 33a of the rotor fixing plate 33 inserted from a lower portion of the stator means 20. The rotor means 30 is inserted from an upper portion of the stator means 20. A core exposed on an upper surface of the stator means 20 and the magnet 31 of the rotor means 30 inserted into the upper portion of the stator means 20 maintain a certain distance from each other. At this time, a thickness of the second gap stopper 45b is formed so that distances between the magnets 31 located at both ends of the stator means 20 are the same.

After inserting the top lid 35 into the shaft 10 so that it comes into contact with an upper end of the stator casing 21, the top lid 35, the stator means 20, and the bottom lid 40 are coupled using the bolt 12. Accordingly, in this embodiment, assembly of the motor may be facilitated.

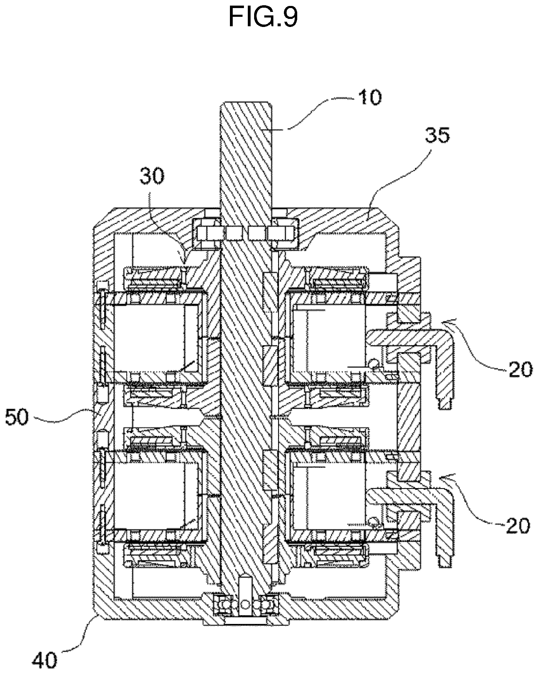

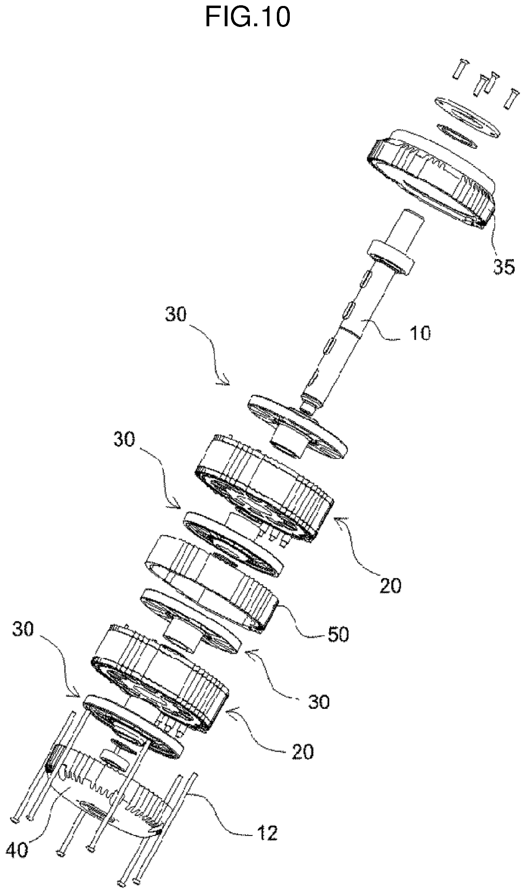

FIGS. 9 and 10 show another embodiment of an axial motor according to the present invention.

The axial motor of the embodiment of FIG. 1 has one stator means 20, but the axial motor of the embodiment of FIGS. 9 and 10 has the stator means 20 arranged in two stages in the axial direction of the shaft 10.

At this time, a pair of rotor means 30 is located between a pair of stator means 20. In this embodiment, the axial motor further includes a rotor middle housing 50 to accommodate the rotor means 30 located between the stator means 20. The rotor middle housing 50 is located between the stator means 20 to accommodate the rotor means 30, and is fixed to be attachable/detachable to/from the stator casing 21. Even in this embodiment, the rotor middle housing 50 may be fixed with the bolt 12. Therefore, in this embodiment, the stator means 20 may be easily expanded into multiple stages.

## Claims

1. An axial motor comprising:
a shaft;
a stator means having a stator casing, a core of which both ends are exposed from both ends of the stator casing in an axial direction, and a coil accommodated in the stator casing so as to encompass the core, and having the shaft penetratively inserted therein;
a plurality of rotor means having a plurality of magnets spaced certain distances apart in a radial direction of the shaft and arranged in a circumferential direction to face the core exposed from one end of the stator casing in the axial direction of the shaft, and a rotor fixing plate, which fixes the magnets such that one surface of the magnet facing the core is exposed and which is injected to be inserted into the stator means and fixed and coupled so as to be integrally rotatable with the shaft, and being inserted into both ends of the stator means;
a top lid into which the shaft is rotatably inserted, and which is coupled to be attachable/detachable to/from the stator casing so that a rotor means located at one end of the shaft is accommodated therein; and
a bottom lid into which the shaft is rotatably inserted, and which is coupled to be attachable/detachable to/from the stator casing so that a rotor means located at the other end of the shaft is accommodated therein,
wherein, when one end of the rotor means is inserted into the stator means, facing surfaces of the magnets and the core are located at certain distances.

2. The axial motor of claim 1, wherein the stator casing comprises a stator housing that accommodates the core and is open at both ends, a stator upper guard coupled to be attachable/detachable to/from one end of the stator housing, and a stator lower guard coupled to be attachable/detachable to/from the other end of the stator housing,
wherein the core comprises a first core portion having a first header portion and a first winding portion protruding in the axial direction from the first header portion, and a second core portion having a second winding portion protruding in the axial direction from a second header portion so that one end of the second header portion comes into contact with one end of the first winding portion so that the second header portion and the coil are wound, and
the stator means comprises an upper carrier in which resin is injected so that one surface of the first header portion is exposed at one end of the stator means and is fixed to the stator upper guard by surrounding the first core portion and a lower carrier that is fixed to the stator lower guard by surrounding the second core portion so that one surface of the second header portion is exposed at the other end of the stator means, and further comprises a carrier portion through which the coil is wound and the shaft is inserted between the first head portion and the second header portion.

3. The axial motor of claim 2, wherein the upper carrier is injected so that its inner peripheral surface protrudes in the axial direction, and
the lower carrier is injected so that its inner peripheral surface protrudes in the axial direction,
wherein the carrier portion is coupled to be attachable/detachable to/from one end protruding in the axial direction so that the upper carrier and the lower carrier surround the coil.

4. The axial motor of claim 3, further comprising:
a plurality of gap stoppers for limiting a position of an end portion of the rotor fixing plate in the axial direction of the shaft so that the magnet is located at a certain distance from an opposing surface of the coil when the rotor fixing plate is inserted into the stator mean.

5. The axial motor of any one of claims 1 through 4, wherein the coil has a bar-shaped rectangular shape with a square cross-section, and is wound in one stage in a width direction of the core and wound in a longitudinal direction of the core.

6. The axial motor of claim 5, wherein a plurality of stator means are provided in the axial direction of the shaft, and the axial motor further comprising:
a rotor middle housing that accommodates the rotor means located between the stator means and is fixed to be attachable/detachable to/from the stator casing.

7. The axial motor of claim 5, wherein a thickness of the coil in the width direction of the core is greater than a thickness of the coil in an axial direction of the core.

8. The axial motor of claim 7, wherein the coil is made of a hollow tube so that refrigerant flows therein.
